# EUROPEAN PATENT SPECIFICATION

(11) **EP 4 299 934 B1**
(45) Date of publication and mention of the grant of the patent: **03.09.2025**
(21) Application number: 23181296.7
(22) Date of filing: 23.06.2023
(51) Int. Cl.: F16D 3/16, B62D 1/16, B62D 1/19

(54) **IMPROVED JOINT CONNECTION FOR A VEHICLE**
VERBESSERTE GELENKVERBINDUNG FÜR EIN FAHRZEUG
LIAISON D'ARTICULATION AMÉLIORÉE POUR UN VÉHICULE

(30) Priority: 27.06.2022 IT 202200013549
(43) Date of publication of application: 03.01.2024
(73) Proprietor: CNH Industrial Italia S.p.A., 10156 Torino (IT)
(72) Inventor: MAGRINI, Sergio, 10156 Turin (IT)
(74) Representative: CNH Industrial IP Department

(56) References cited:
- EP-A1- 0 721 411
- EP-A1- 1 515 884
- EP-B1- 0 721 411
- EP-B1- 1 515 884
- DE-A1- 10 228 207

## Description

### TECHNICAL FIELD

The present invention concerns a joint connection, in particular a joint connection for a vehicle such as a work vehicle.

The present invention finds its preferred, although not exclusive, application in a joint connection for a steering system of the work vehicle. Reference will be made to this application by way of example below.

### BACKGROUND OF THE INVENTION

As is known, a vehicle has a steering system which comprises a steering wheel operable by an operator of the vehicle, a first rotating element configured to rotate in response to rotation of the steering wheel, and a second rotating element configured to rotate in response to rotation of the first rotating element so as to transmit motion to downstream elements of a transmission.

The first and second rotating elements have respective first and second rotation axes, which are normally coincident. However, due to relative movements between the first and second rotating elements, the first and second rotation axes may be parallel but non-coincident, intersecting, or even skew.

In the case of a work vehicle, the first rotating element may be a steering column located inside a cabin of the vehicle, and the second rotating element may be a pin of a hydraulic transmission. The relative movements between the first and second rotating elements may be due to vertical and/or horizontal oscillations of the work vehicle, caused e.g. by the particular conformation of clods underneath it.

In order to allow transmission of rotation (and thus of torque) between the first and second rotating elements irrespective of the aforementioned relative movements, a joint connection interposed therebetween may be used, as disclosed e.g. in GB2282433A.

However, known joint connections, such as the one cited above or the examples disclosed in EP1515884A1 and DE10228207A1, have problems related to assembly, noise production, and backlash compensation.

Therefore, the need is felt to improve known joint connections.

An aim of the present invention is to satisfy the above-mentioned needs in a cost-effective and optimised manner.

### SUMMARY OF THE INVENTION

The aforementioned aim is reached by a joint connection as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a front view of a portion of steering system of a vehicle comprising a joint connection according to the invention;
- Figures 2, 3 are perspective views of the joint connection of figure 1;
- Figure 4 is an exploded view of the joint connection of figure 1; and
- Figure 5 is a cross-sectional side view of the joint connection of figure 1, with a detail in enlarged scale.

### DETAILED DESCRIPTION OF THE INVENTION

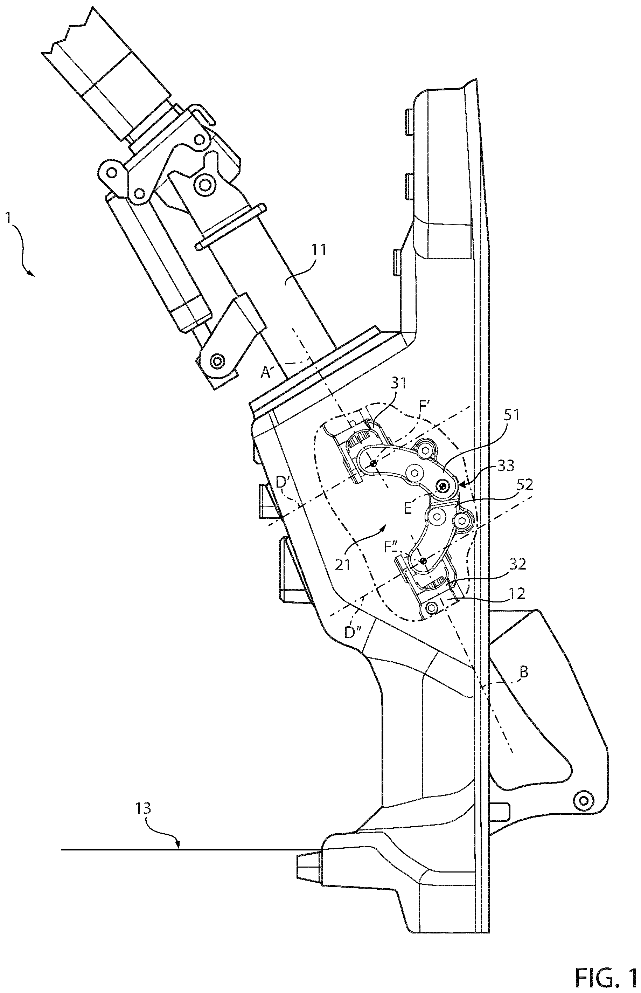

Figure 1 shows an exemplarily interior space of a cab of a vehicle 1, in particular a work vehicle, shown only partially for the sake of clarity.

In the following, a steering system will be described to provide an application of the present invention. However, it is clear that the present invention may be applied to other operational systems of the work vehicle.

As is known, the vehicle 1 has a steering system which comprises a steering wheel (not shown) operable by an operator of the vehicle, a first rotating element 11 configured to rotate about an axis A in response to rotation of the steering wheel, and a second rotating element 12 configured to rotate about an axis B in response to rotation of the first rotating element 11 so as to transmit motion to downstream elements of a transmission.

In particular, the first rotating element 11 is a steering column located inside the cab of the vehicle 1, i.e. above a cab floor 13, and the second rotating element 12 is e.g. a pin of the transmission, which is e.g. a hydraulic transmission.

The axes A and B are normally coincident. However, due to relative movements between the first and second rotating elements 11, 12, the relative position between the axes A and B may be any. In particular, the axes A and B may be parallel but non-coincident, or intersecting, or even skew.

The steering system comprises a joint connection 21 which is operatively interposed between the first rotating element 11 and the second rotating element 12.

The joint connection 21 comprises a first coupling element 31 configured to be coupled to the first rotating element 11, a second coupling element 32 configured to be coupled to the second rotating element 12, and an intermediate assembly 33 interposed between the first coupling element 31 and the second coupling element 32, as described in detail hereinafter.

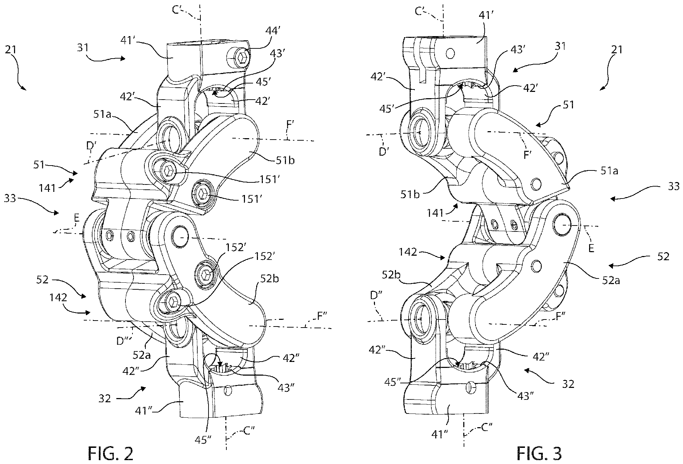

The first coupling element 31 (figures 2, 3) is carried in a fixed manner with respect to rotation by the first rotating element 11, i.e. it is configured to rotate about an axis C' together with (i.e. with the same angular speed as) such first rotating element 11. In particular, the axis C' coincides, in use, with the axis A.

Similarly, the second coupling element 32 is carried in a fixed manner with respect to rotation by the second rotating element 12, i.e. it is configured to rotate about an axis C" together with (i.e. with the same angular speed as) such second rotating element 12. In particular, the axis C" coincides, in use, with the axis B.

The first coupling element 31 and the second coupling element 32 have substantially the same shape. Therefore, for the sake of conciseness, only the first coupling element 31 is described hereinafter, using apex ' in its reference signs. The same reference signs are used for the second coupling element 32, wherein apex " is used instead of apex '.

The first coupling element 31 extends substantially along the axis C' and comprises a hub portion 41' and two axial projections 42' extending therefrom.

The hub portion 41' is fixed to the first rotating element 11, preferably via a shape coupling. In particular, the hub portion 41' has an internal spline 43', realised along the axis C', complementary to an external profile (not shown) of the first rotating element 11.

Conveniently, the hub portion 41' and the first rotating element 11 have respective through-holes, orthogonal to axis C', wherein a screw 44' can be inserted so that the hub portion 41' and the first rotating element 11 are rigidly coupled.

The two axial projections 42' are arranged on opposite sides of the hub portion 41' with respect to the axis C'. In particular, the two axial projections 42' have substantially the same structure, are parallel and face each other. Therefore, the hub portion 41' and the two axial projections 42' collectively define a housing 45', which is substantially "U-shaped".

Furthermore, the two axial projections 42' have respective through-holes 46' having a common axis D', orthogonal to the axis C'.

The intermediate assembly 33 comprises a first arm 51 and a second arm 52 hinged together on an intermediate hinge axis E. Furthermore, the first arm 51 is movably coupled to the first coupling element 31 via a first movable connection 61 with two rotational degrees of freedom, the second arm 52 is movably coupled to the second coupling element via a second movable connection 62 with two rotational degrees of freedom.

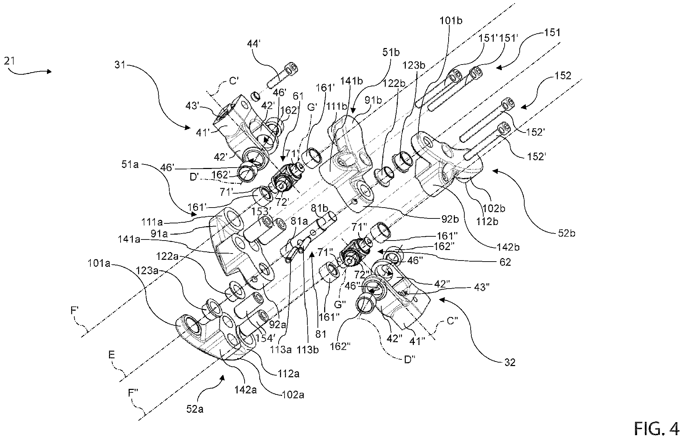

Conveniently (figure 4), the first movable connection 61 is realised by a first cruise 61, operatively interposed between the first coupling element 31 and the first arm 51, and the second movable connection 62 is realised by a second cruise 62, operatively interposed between the second coupling element 32 and the second arm 52.

In particular, the first cruise 61 comprises first ends 71' configured to define a first hinge axis F', and second ends 72' configured to define a first-coupling-element hinge axis G' which is orthogonal to the axis C' of the first coupling element 31. The first arm 51 is hinged to the first cruise 61 on the first hinge axis F', and the first coupling element 31 is hinged to the first cruise 61 on the first-coupling-element hinge axis G'.

Similarly, the second cruise 62 comprises first ends 71" configured to define a second hinge axis F", and second ends 72" configured to define a second-coupling-element hinge axis G" which is orthogonal to the axis C" of the second coupling element 32. The second arm 52 is hinged to the second cruise 62 on the second hinge axis F", and the second coupling element 32 is hinged to the second cruise 62 on the second-coupling-element hinge axis G".

Conveniently, the first cruise 61 is arranged in the housing 45' of the first coupling element 31, and its second ends 72' engage the respective through-holes 46' in a rotationally-free manner, thus realising the hinge connection between the first coupling element 31 and the first cruise 61. In particular, the axis D' of the first coupling element 31 coincides with the first-coupling-element hinge axis G' of the first cruise 61.

Similarly, the second cruise 62 is arranged in the housing 45" of the second coupling element 32, and its second ends 72" engage the respective through-holes 46" in a rotationally-free manner, thus realising the hinge connection between the second coupling element 32 and the second cruise 62. In particular, the axis D" of the second coupling element 32 coincides with the first-coupling-element hinge axis G" of the second cruise 62.

Preferably, the first ends 71' of the first cruise 61 are orthogonal to the second ends 72' of the first cruise 61, and the first ends 71" of the second cruise 62 are orthogonal to the second ends 72" of the second cruise 62.

Preferably, the first hinge axis F', the second hinge axis F" and the intermediate hinge axis E are substantially parallel to each other.

Referring back to figure 1, the first arm 51 and the second arm 52 of the intermediate assembly 33 preferably have a substantially curved profile.

Conveniently, the intermediate assembly 33 (figures 2-5) is symmetric with respect to a plane orthogonal to the intermediate hinge axis E.

According to the invention, intermediate assembly 33 (figure 4) comprises an intermediate pin 81, described in detail hereinafter, configured to define the intermediate hinge axis E.

The first arm 51 of the intermediate assembly 33 has first extremities 91a, 91b and second extremities 92a, 92b opposite to the first extremities 91a, 91b with respect to the main extension of the first arm 51.

Similarly, the second arm 52 of the intermediate assembly 33 has first extremities 101a, 101b and second extremities 102a, 102b opposite to the first extremities 101a, 101b with respect to the main extension of the second arm 52.

According to the invention, the first extremities 91a, 91b of the first arm 51 are coupled to the first coupling element 31 via the first cruise 61, the second extremities 92a, 92b of the first arm 51 are coupled to the first extremities 101a, 101b of the second arm 52 via the intermediate pin 81, and the second extremities 102a, 102b of the second arm 52 are coupled to the second coupling element 32 via the second cruise 62.

In particular:
- the first extremities 91a, 91b of the first arm 51 define respective housings 111a, 111b, realised e.g. as cantilevered portions extending along the first hinge axis F' towards the first cruise 61. The first ends 71' of the first cruise 61 engage the respective housings 111a, 111b in a rotationally-free manner, thus realising the hinge connection between the first arm 51 and the first cruise 61;
- the second extremities 92a, 92b of the first arm 51 and the first extremities 101a, 101b of the second arm 52 collectively define a through-hole, extending along the intermediate hinge axis E, which is engaged by the intermediate pin 81, thus realising the hinge connection between the first arm 51 and the second arm 52;
- the second extremities 102a, 102b of the second arm 52 define respective housings 112a, 112b, realised e.g. as cantilevered portions extending along the second hinge axis F" towards the second cruise 62. The second ends 72" of the second cruise 62 engage the respective housings 112a, 112b in a rotationally-free manner, thus realising the hinge connection between the second arm 52 and the second cruise 62.

Therefore, the two rotational degrees of freedom between the first arm 51 and the first coupling element 31 are realised by the hinge connection between first arm 51 and the first cruise 61 and the hinge connection between the first cruise 61 and the first coupling element 31.

Similarly, the two rotational degrees of freedom between the second arm 52 and the second coupling element 32 are realised by the hinge connection between second arm 52 and the second cruise 62 and the hinge connection between the second cruise 62 and the second coupling element 32.

In the exemplarily shown embodiment, the second extremities 92a, 92b of the first arm 51 are interposed, with respect to the intermediate hinge axis E, between the first extremities 101a, 101b of the second arm 52. In other words, the second extremities 92a, 92b of the first arm 51 are axially internal, along the direction of the intermediate hinge axis E, between the first extremities 101a, 101b of the second arm 52. In particular, the second extremities 92a, 92b of the first arm 51 are in contact.

Preferably, the intermediate pin 81 is fixedly carried by the first arm 51. In particular, the intermediate pin 81 may be provided with pegs 113a, 113b extending orthogonally to the intermediate hinge axis E and engaging respective holes of the second extremities 92a, 92b of the first arm 51.

Conveniently, the intermediate assembly 33 comprises bushings 121a, 121b operatively interposed between the first arm 51 and the second arm 52, as described in detail hereinafter.

The bushings 121a, 121b are substantially coaxial to the intermediate hinge axis E. In particular, the bushings 121a, 121b are arranged around the intermediate pin 81, preferably towards terminal portions 81a, 81b thereof. Conveniently, the terminal portions 81a, 81b have the same diameter, which is slightly smaller than the diameter of a central portion 81c of the intermediate pin 81 interposed between the terminal portions 81a, 81b.

In particular, the bushings 121a, 121b comprise hinge bushings 122a, 122b and damping bushings 123a, 123b.

Preferably, the damping bushings 123a, 123b are made of a plastic material.

The hinge bushing 122a and the damping bushing 123a, which are arranged around the terminal portion 81a of the intermediate pin 81, have substantially the same structure as, respectively, the hinge bushing 122b and the damping bushing 123b, which are arranged around the terminal portion 81b of the intermediate pin 81. Therefore, for the sake of conciseness, only the hinge bushing 122b and the damping bushing 123b are described hereinafter.

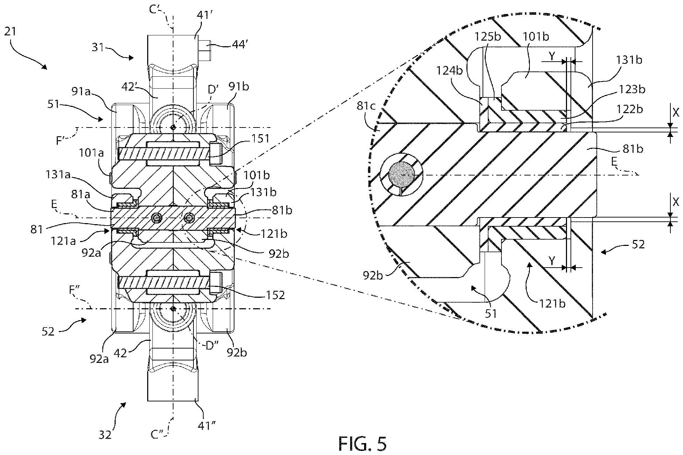

The hinge bushing 122b (see the enlarged detail in figure 5) is interposed between the terminal portion 81b and the damping bushing 123b, in particular both axially and orthogonally with respect to the intermediate hinge axis E.

In particular, along the direction orthogonal to the intermediate hinge axis E, the hinge bushing 122b cooperates by contact, on its internal side, with the terminal portion 81b and, on its external side, with the damping bushing 123b. The damping bushing 123b cooperates by contact, on its internal side, with the hinge bushing 122b and, on its external side, with the first extremity 101b of the second arm 52.

Preferably, the hinge bushing 122b comprises a flange portion 124b, and the damping bushing 123b comprise a flange portion 125b, thus having an "L-shaped" cross-section. In particular, the flange portions 124b, 125b face the first arm 51.

Conveniently, along the direction of the intermediate hinge axis E, the hinge bushing 122b, in particular the flange portion 124b thereof, cooperates by contact, on its internal side, with the second extremity 92b of the first arm 51 and, on its external side, with the damping bushing 123b. The damping bushing 123b, in particular the flange portion 125b thereof, cooperates by contact, on its internal side, with the hinge bushing 122b, in particular the flange portion 124b thereof, and, on its external side, with the first extremity 101b of the second arm 52.

Preferably, a radial clearance X is provided between the intermediate pin 81 and the first arm 51 or the second arm 52. In particular, such radial clearance X is provided between the intermediate pin 81 and the arm (i.e. either the first arm 51 or the second arm 52) whose extremities surrounding the intermediate pin 81 are axially external with respect to the intermediate hinge axis E. Therefore, in the exemplarily shown embodiment, the radial clearance X is provided between the intermediate pin 81 and the first extremities 101a, 101b of the second arm 52.

Conveniently, radial clearance X is provided between the terminal portion 81a of the intermediate pin 81 and an axially terminal portion 131a of the first extremity 101a surrounding the terminal portion 81a itself.

Similarly, radial clearance X is provided between the terminal portion 81b of the intermediate pin 81 and an axially terminal portion 131b of the first extremity 101b surrounding the terminal portion 81b itself.

Conveniently, the radial clearance X is axially external, along the intermediate hinge axis E, with respect to the bushings 121a, 121b. In particular, the radial clearance X is opposite to the flange portions 124a, 125a, 124b, 125b of the respective bushings 122a, 123a, 122b, 123b.

Preferably, the radial clearance X is dimensioned so as to compensate the maximum admissible deflection of the axially terminal portions 131a, 131b of the respective first extremities 101a, 101b.

Conveniently, an axial clearance Y is provided between the bushings 121a, 121b and the first arm 51 or the second arm 52. In particular, such axial clearance Y is provided between the bushings 121a, 121b and the arm (i.e. either the first arm 51 or the second arm 52) whose extremities surrounding the intermediate pin 81 are axially external with respect to the intermediate hinge axis E. Therefore, in the exemplarily shown embodiment, the axial clearance Y is provided between the bushings 121a, 121b and the first extremities 101a, 101b of the second arm 52.

Conveniently, axial clearance Y is provided between the bushings 122a, 123a and the axially terminal portion 131a of the first extremity 101a surrounding the terminal portion 81a.

Similarly, axial clearance Y is provided between the bushings 122b, 123b and the axially terminal portion 131b of the first extremity 101b surrounding the terminal portion 81b.

Conveniently, the axial clearance Y is axially external, along the intermediate hinge axis E, with respect to the bushings 121a, 121b. In particular, the axial clearance Y is opposite to the flange portions 124a, 125a, 124b, 125b of the respective bushings 122a, 123a, 122b, 123b.

Preferably, the axial clearance Y is dimensioned so as to compensate the maximum admissible deflection of the axially terminal portions 131a, 131b of the respective first extremities 101a, 101b.

Furthermore, the axial clearance Y and the radial clearance X together define an "L-shaped" overall clearance between the aforementioned elements.

Conveniently, each of the first arm 51 and the second arm 52 is realised in two pieces which are connectable to each other along the direction of the intermediate hinge axis E. In other words, the first arm 51 is realised in two pieces 51a, 51b which are connectable to each other along the intermediate hinge axis E, and the second arm 52 is realised in two pieces 52a, 52b which are connectable to each other along the direction of the intermediate hinge axis E.

Conveniently, the two pieces 51a, 51b realising the first arm 51 are symmetric with respect to a first plane orthogonal to the intermediate hinge axis E. Similarly, the two pieces 52a, 52b realising the second arm 52 are symmetric with respect to a second plane orthogonal to the intermediate hinge axis E. Preferably, such first plane and such second plane are coincident, i.e. they define the aforementioned plane with respect to which the intermediate assembly 33 is symmetric.

The first arm 51 has a central portion 141 interposed between its first extremities 91a, 91b and second extremities 92a, 92b and configured to join the two pieces 51a, 51b realising the first arm 51 itself. Conveniently, the central portion 141 is realised by respective central portions 141a, 141b of the respective pieces 51a, 51b realising the first arm 51. In view of the structure and arrangement of its components, the first arm 51 has substantially a "Y" shape.

Similarly, the second arm 52 has a central portion 142 interposed between its first extremities 101a, 101b and second extremities 102a, 102b and configured to join the two pieces 52a, 52b realising the second arm 52 itself. Conveniently, the central portion 142 is realised by respective central portions 142a, 142b of the respective pieces 52a, 52b realising the second arm 52. In view of the structure and arrangement of its components, the second arm 52 has substantially an "H" shape.

Conveniently, the first arm 51 comprises connecting means 151 configured to join its two pieces 51a, 51b. For example, the connecting means 151 of the first arm 51 comprise screws 151' which extend parallel to the intermediate hinge axis E and can be inserted into respective through-holes provided in the central portion 141 of the first arm 51.

Similarly, the second arm 52 comprises connecting means 152 configured to join its two pieces 52a, 52b. For example, the connecting means 152 of the second arm 52 comprise screws 152' which extend parallel to the intermediate hinge axis E and can be inserted into respective through-holes provided in the central portion 142 of the second arm 52.

Conveniently, the screws 151', 152' are configured to cooperate with respective support pins 153', 154' housed in the through-holes provided in the central portions 141, 142. In particular, the support pins 153', 154' are hollow and allow the respective screws 151', 152' to pass therethrough.

Preferably, the joint connection 21 also comprises a plurality of bearings, described in detail hereinafter. Conveniently, for each end of each cruise, one bearing is interposed between such end and the respective element to which such end is coupled.

In particular:
- two bearings 161' are interposed between the first ends 71' of the first cruise 61 and the respective first extremities 91a, 91b of the first arm 51. In particular, the bearings are housed in the respective housings 111a, 111b;
- two bearings 162' are interposed between the second ends 72' of the first cruise 61 and the respective axial projections 42' of the first coupling element 31. In particular, the bearings are housed in the respective through-holes 46';
- two bearings 161" are interposed between the first ends 71" of the second cruise 62 and the respective second extremities 102a, 102b of the second arm 52. In particular, the bearings are housed in the respective housings 112a, 112b;
- two bearings 162" are interposed between the second ends 72" of the second cruise 62 and the respective axial projections 42" of the second coupling element 32. In particular, the bearings are housed in the respective through-holes 46".

The operation of the joint connection 21 according to the invention as described above is the following.

When the first rotating element 11 rotates about the axis A in response to rotation of the steering wheel, the first coupling element 31 rotates about the axis C', coincident with the axis A, with the same angular speed as the first rotating element 11. The first cruise 61 is brought into rotation by the first coupling element 31, in particular via the axial projections 42' thereof. The intermediate assembly 33 is brought into rotation by the first cruise 61, and brings into rotation the second cruise 62. The second cruise brings into rotation the second coupling element 32, in particular via the axial projections 42" thereof. The second coupling element 32 rotates about the axis C", and the second rotating element 32 rotates about the axis B, coincident with the axis C", with the same angular speed as the second rotating element 12.

The relative position between the axes A and B can be any, thanks to the two rotational degrees of freedom between the first coupling element 31 and the first arm 51, the hinge connection between the first arm 51 and the second arm 52 of the intermediate assembly 33, and the two rotational degrees of freedom between the second arm 52 and the second coupling element 32.

Any relative displacements between the first coupling element 31 (and thus the first rotating element 11) and the second coupling element 32 (and thus the second rotating element 12) can be compensated for by the hinge connection between the first arm 31 and the second arm 32. Indeed, the intermediate assembly 33 can move between an "open configuration", wherein the distance between the first extremities 91a, 91b of the first arm 51 and the second extremities 102a, 102b is maximum, and a "closed configuration", wherein such distance is minimum.

During the transmission of motion, via the joint connection 21, from the first rotating element 11 to the second rotating element 12, a tendency of homokinetic motion can be observed therebetween. Indeed, irrespective of the relative position between the first rotating element 11 and the second rotating element 12, they have substantially the same angular speed due to the joint connection 21, which thus tends to be a homokinetic joint.

During operation, there may be relative movements between the first arm 51 and the second arm 52 causing non-parallelism between the first hinge axis F', the second hinge axis F" and the intermediate hinge axis E. Such non-parallelism can be compensated by the bushings 121a, 121b. In particular, the radial clearance X and the axial clearance Y allow to compensate possible deflections of the second arm 52, in particular of the axially terminal portions 131a, 131b, towards the intermediate pin 81, in particular the terminal portions 81a, 81b.

When assembling the intermediate assembly 33 of the joint connection 21, first the intermediate pin 81 is provided. Then, the two pieces 51a, 51b are connected to each other along the direction of the intermediate hinge axis E, thus realising the first arm 51. In particular, the second extremities 92a, 92b of the first arm 51 come into contact with each other. After that, the bushings 121a, 121b are arranged on the respective terminal portions 81a, 81b of the intermediate pin 81. Finally, the two pieces 52a, 52b are connected to each other along the direction of the intermediate hinge axis E, thus realising the second arm 52.

In view of the foregoing, the advantages of the joint connection 21 according to the invention are apparent.

The joint connection 21 is an improvement of known joint connections in terms of assembly, noise production, and backlash compensation.

In particular, since each of the each of the first arm 51 and the second arm 52 is realised in two pieces which are connectable to each other along the intermediate hinge axis E, the assembly of the joint connection 21 is easier and the centring of its components is improved. Furthermore, the reliability and the precision of the joint connection 21 is increased.

The bushings 121a, 121b operatively interposed between the first arm 51 and the second arm 52 of the intermediate assembly 33 allow to reduce noise production, to dampen movements between the first arm 51 and the second arm 52, to attenuate vibrations coming from other upstream and/or downstream elements, and to compensate for any non-parallelism between the first hinge axis F', the second hinge axis F" and the intermediate hinge axis E. In particular, the radial clearance X and the axial clearance Y allow to preserve the quality of motion in case of sudden cracking, jumping, mechanical performance worsening, and even impacts.

The support pins 153', 154' increase resistance to shear stresses and thus overall strength of the first arm 51 and the second arm 52, each realised in two pieces.

It is clear that modifications can be made to the described joint connection 21 which do not extend beyond the scope of protection defined by the claims.

For example, the shape of the elements of the joint connection 21 may be different from that described.

The first arm 51 and the second arm 52 may be swapped with each other.

The first cruise 61 and/or the second cruise 62 may be replaced by any other movable connection providing two rotational degrees of freedom between the respective coupling element 31, 32 and the respective arm 51, 52.

## Claims

1. Joint connection for a vehicle (1), comprising a first coupling element (31) configured to be coupled to a first rotating element (11), a second coupling element (32) configured to be coupled to a second rotating element (12), and an intermediate assembly (33) operatively interposed between the first and second coupling elements (31, 32), wherein the intermediate assembly (33) comprises a first arm (51) and a second arm (52) hinged together on an intermediate hinge axis (E), the first arm (51) being movably coupled to the first coupling element (31) via a first movable connection (61) with two rotational degrees of freedom, the second arm (52) being movably coupled to the second coupling element (32) via a second movable connection (62) with two rotational degrees of freedom,
wherein each of the first arm (51) and the second arm (52) is realised in two pieces (51a, 51b, 52a, 52b) which are connectable to each other along the intermediate hinge axis (E);
said joint connection further comprising:
- a first cruise (61) operatively interposed between the first coupling element (31) and the first arm (51), the first cruise (61) defining the first movable connection; and
- a second cruise (62) operatively interposed between the second coupling element (32) and the second arm (52), the second cruise (62) defining the second movable connection;
the joint connection being **characterized in that** the intermediate assembly (33) comprises an intermediate pin (81) configured to define the intermediate hinge axis (E), wherein each of the first arm (51) and the second arm (52) has first extremities (91a, 91b, 101a, 101b) and second extremities (92a, 92b, 102a, 102b) opposite to the first extremities (91a, 91b, 101a, 101b), wherein the first extremities (91a, 91b) of the first arm (51) are coupled to the first coupling element (31) via the first cruise (61), the second extremities (92a, 92b) of the first arm (51) are coupled to the first extremities (101a, 101b) of the second arm (52) via the intermediate pin (81), and the second extremities (102a, 102b) of the second arm (52) are coupled to the second coupling element (32) via the second cruise (62).

2. Joint connection as claimed in claim 1, wherein the first arm (51) and the second arm (52) have a substantially curved profile.

3. Joint connection as claimed in claim 1 or 2, wherein one of the first arm (51) and the second arm (52) has substantially a "Y" shape and the other of the first arm (51) and the second arm (52) has substantially an "H" shape.

4. Joint connection as claimed in any of the preceding claims, wherein the intermediate assembly (33) is symmetric with respect to a plane orthogonal to the intermediate hinge axis (E).

5. Joint connection as claimed in any of the preceding claims, wherein the two pieces (51a, 51b) realising the first arm (51) are symmetric with respect to a first plane orthogonal to the intermediate hinge axis (E).

6. Joint connection as claimed in any of the preceding claims, wherein the two pieces (52a, 52b) realising the second arm (52) are symmetric with respect to a second plane orthogonal to the intermediate hinge axis (E).

7. Joint connection as claimed in claims 5 and 6, wherein the first plane and the second plane are coincident.

8. Joint connection as claimed in any of the preceding claims, wherein each of the first arm (51) and the second arm (52) has a central portion (141, 142) interposed between the respective first and second extremities (91a, 91b, 92a, 92b, 101a, 101b, 102a, 102b) and configured to join the two pieces (51a, 51b, 52a, 52b) realising the respective arm (51, 52).

9. Joint connection as claimed in claim any of the preceding claims, wherein each of the first arm (51) and the second arm (52) comprises connecting means (151, 152) configured to join the two pieces (51a, 51b, 52a, 52b) realising the respective arm (51, 52).

10. Joint connection as claimed in any of the previous claims, wherein the connecting means (151, 152) comprise at least one screw (151', 152') extending parallel to the intermediate hinge axis (E).

11. Joint connection as claimed in any of the previous claims, wherein the second extremities (92a, 92b) of the first arm (51) are interposed, with respect to the intermediate hinge axis (E), between the first extremities (101a, 101b) of the second arm (52).

12. Joint connection as claimed in any of the previous claims, wherein the first arm (51) has substantially a "Y" shape and the second arm (52) has substantially an "H" shape.

13. Joint connection as claimed in any of the previous claims, wherein:
- the first cruise (61) comprises first ends (71') configured to define a first hinge axis (F'), and the first arm (51) is hinged to the first cruise (61) on the first hinge axis (F'); and
- the second cruise (62) comprises first ends (71") configured to define a second hinge axis (F"), and the second arm (52) is hinged to the second cruise (62) on the second hinge axis (F").

14. Joint connection as claimed in any of the previous claims, wherein:
- the first cruise (61) comprises second ends (72') configured to define a first-coupling-element hinge axis (G'), orthogonal to a rotational axis (C') of the first coupling element (31), and the first coupling element (31) is hinged to the first cruise (61) on the first-coupling-element hinge axis (G'); and
- the second cruise (62) comprises second ends (72") configured to define a second-coupling-element hinge axis (G"), orthogonal to a rotational axis (C") of the second coupling element (32), and the second coupling element (32) is hinged to the second cruise (62) on the second-coupling-element hinge axis (G").

15. Joint connection as claimed in any of the previous claims, wherein the first ends (71') of the first cruise (61) are orthogonal to the second ends (72') of the first cruise (61), and the first ends (71") of the second cruise (62) are orthogonal to the second ends (72") of the second cruise (62).

16. Joint connection as claimed in any of the previous claims, wherein the first hinge axis (F'), the second hinge axis (F") and the intermediate hinge axis (E) are substantially parallel to each other.

17. Joint connection as claimed in any of the preceding claims, wherein the intermediate assembly (33) comprises bushings (121a, 121b) operatively interposed between the first arm (51) and the second arm (52).

18. Joint connection as claimed in any of the previous claims, comprising a plurality of bearings (161', 162', 161", 162"), wherein for each end (71', 72', 71", 72") of each cruise (61, 62), one of said bearings (161', 162', 161", 162") is interposed between said end (71', 72', 71", 72") and the respective element to which said end (71', 72', 71", 72") is coupled.

19. Operational system for a work vehicle (1) comprising a first rotating element (11) and a second rotating element (12) connected by a joint connection (21) as claimed in any of the preceding claims.

## Patentansprüche

1. Gelenkverbindung für ein Fahrzeug (1) umfassend ein erstes Verbindungselement (31), das dazu eingerichtet ist, mit einem ersten drehenden Element (11) verbunden zu sein, einem zweiten Verbindungselement (32), das dazu eingerichtet ist, mit einem zweiten drehenden Element (12) verbunden zu sein, und eine dazwischenliegende Anordnung (33), die wirkend zwischen dem ersten und dem zweiten Verbindungselement (31, 32) angeordnet ist, wobei die dazwischenliegende Anordnung (33) einen ersten Schenkel (51) und einen zweiten Schenkel (52) umfasst, die an einer zwischenliegenden Schwenkachse (E) schwenkbeweglich miteinander verbunden sind, wobei der erste Schenkel (51) über eine erste bewegliche Verbindung (61) mit zwei Rotationsfreiheitsgraden mit dem ersten Verbindungselement (31) beweglich verbunden ist, und wobei der zweite Schenkel (52) über eine zweite bewegliche Verbindung (62) mit zwei Rotationsfreiheitsgraden mit dem zweiten Verbindungselement (32) beweglich verbunden ist,
wobei sowohl der erste Schenkel (51) als auch der zweite Schenkel (52) durch zwei Teile (51a, 51b, 52a, 52b) verwirklicht sind, die entlang der zwischenliegenden Schwenkachse (E) miteinander verbindbar sind;
wobei die Gelenkverbindung weiterhin umfasst:
- ein erstes Kreuzelement (61), das wirkend zwischen dem ersten Verbindungselement (31) und dem ersten Schenkel (51) angeordnet ist, wobei das erste Kreuzelement (61) die erste bewegliche Verbindung definiert; und
- ein zweites Kreuzelement (62), das wirkend zwischen dem zweiten Verbindungselement (32) und dem zweiten Schenkel (52) angeordnet ist, wobei das zweite Kreuzelement (62) die zweite bewegliche Verbindung definiert;
wobei die Gelenkverbindung **dadurch gekennzeichnet ist, dass**
die dazwischenliegende Anordnung (33) einen zwischengeordneten Stift (81) umfasst, der dazu eingerichtet ist, die zwischenliegende Schwenkachse (E) zu definieren, wobei sowohl der erste Schenkel (51) als auch der zweite Schenkel (52) erste Gliedelemente (91a, 91b, 101a, 101b) und zweite Gliedelemente (92a, 92b, 102a, 102b) gegenüber den ersten Gliedelementen (91a, 91b, 101a, 101b) umfassen, wobei die ersten Gliedelemente (91a, 91b) des ersten Schenkels (51) über das erste Kreuzelement (61) mit dem ersten Verbindungselement (31) verbunden sind, die zweiten Gliedelemente (92a, 92b) des ersten Schenkels (51) mit den ersten Gliedelementen (101a, 101b) des zweiten Schenkels (52) über den zwischenliegenden Stift (81) verbunden sind, und die zweiten Gliedelemente (102a, 102b) des zweiten Schenkels (52) über das zweite Kreuzelement (62) mit dem zweiten Verbindungselement (32) verbunden sind.

2. Gelenkverbindung nach Anspruch 1, wobei der erste Schenkel (51) und der zweite Schenkel (52) ein im Wesentlichen gekrümmtes Profil haben.

3. Gelenkverbindung nach Anspruch 1 oder 2, wobei einer aus dem ersten Schenkel (51) und dem zweiten Schenkel (52) eine im Wesentlichen "Y"-förmige Form aufweist und der andere aus dem ersten Schenkel (51) und dem zweiten Schenkel (52) eine im Wesentlichen "H"-förmige Form aufweist.

4. Gelenkverbindung nach einem der vorhergehenden Ansprüche, wobei die dazwischenliegende Anordnung (33) symmetrisch bezüglich einer Ebene senkrecht zur zwischenliegenden Schwenkachse (E) symmetrisch ist.

5. Gelenkverbindung nach einem der vorhergehenden Ansprüche, wobei die beiden Teile (51a, 51b), die den ersten Schenkel (51) verwirklichen, bezüglich einer ersten Ebene senkrecht zur zwischenliegenden Schwenkachse (E) symmetrisch sind.

6. Gelenkverbindung nach einem der vorhergehenden Ansprüche, wobei die beiden Teile (52a, 52b), die den zweiten Schenkel (52) verwirklichen, bezüglich einer zweiten Ebene senkrecht zur zwischenliegenden Gelenklachse (E) symmetrisch sind.

7. Gelenkverbindung nach den Ansprüchen 5 und 6, wobei die erste Ebene und die zweite Ebene zusammenfallen.

8. Gelenkverbindung nach einem der vorhergehenden Ansprüche, wobei der erste Schenkel (51) und der zweite Schenkel (52) jeweils einen zentralen Abschnitt (141, 142) aufweisen, der zwischen den jeweiligen ersten und zweiten Gliedelementen (91a, 91b, 92a, 92b, 101a, 101b, 102a, 102b) angeordnet und dazu eingerichtet ist, die beiden Teile (51a, 51b, 52a, 52b) zu verbinden, die den jeweiligen Schenkel (51, 52) verwirklichen.

9. Gelenkverbindung nach einem der vorhergehenden Ansprüche, wobei der erste Schenkel (51) und der zweite Schenkel (52) jeweils eine Verbindungseinrichtung (151, 152) aufweisen, die dazu eingerichtet ist, die beiden Teile (51a, 51b, 52a, 52b) zu verbinden, die den jeweiligen Schenkel (51, 52) verwirklichen.

10. Gelenkverbindung nach einem der vorhergehenden Ansprüche, wobei die Verbindungseinrichtung (151, 152) mindestens eine Schraube (151', 152') umfasst, die sich parallel zur zwischenliegenden Schwenkachse (E) erstreckt.

11. Gelenkverbindung nach einem der vorhergehenden Ansprüche, wobei die zweiten Gliedelemente (92a, 92b) des ersten Schenkels (51) bezüglich der zwischenliegenden Schwenkachse (E) zwischen den ersten Gliedelementen (101a, 101b) des zweiten Schenkels (52) angeordnet sind.

12. Gelenkverbindung nach einem der vorhergehenden Ansprüche, wobei der erste Schenkel (51) eine im Wesentlichen "Y"-förmige Form hat und der zweite Schenkel (52) eine im Wesentlichen "H"-förmige Form hat.

13. Gelenkverbindung nach einem der vorhergehenden Ansprüche, wobei:
- das erste Kreuzelement (61) erste Enden (71') aufweist, die dazu eingerichtet sind, eine erste Schwenkachse (F') zu definieren, und der erste Schenkel (51) an der ersten Schwenkachse (F') mit dem ersten Kreuzelement (61) schwenkbeweglich verbunden ist, und
- das zweite Kreuzelement (62) erste Enden (71") aufweist, die dazu eingerichtet sind, eine zweite Schwenkachse (F") zu definieren, und der zweite Schenkel (52) an der zweiten Schwenkachse (F") mit dem zweiten Kreuzelement (62) schwenkbeweglich verbunden ist.

14. Gelenkverbindung nach einem der vorhergehenden Ansprüche, wobei:
- das erste Kreuzelement (61) zweite Enden (72') aufweist, die dazu eingerichtet sind, eine Schwenkachse (G') des ersten Verbindungselements zu definieren, die senkrecht zu einer Drehachse (C') des ersten Verbindungselements (31) ist, und das erste Verbindungselement (31) an der Schwenkachse (G') des ersten Verbindungselements mit dem ersten Kreuzelement (61) schwenkbeweglich verbunden ist, und
- das zweite Kreuzelement (62) zweite Enden (72") aufweist, die dazu eingerichtet sind, eine Schwenkachse (G") des zweiten Verbindungselements zu definieren, die senkrecht zu einer Drehachse (C") des zweiten Verbindungselements (32) ist, und das zweite Verbindungselement (32) an der Schwenkachse (G") des zweiten Verbindungselements mit dem zweiten Kreuzelement (62) schwenkbeweglich verbunden ist.

15. Gelenkverbindung nach einem der vorhergehenden Ansprüche, wobei die ersten Enden (71') des ersten Kreuzelements (61) senkrecht zu den zweiten Enden (72') des ersten Kreuzelements (61) sind, und die ersten Enden (71") des zweiten Kreuzelements (62) senkrecht zu den zweiten Enden (72") des zweiten Kreuzelements (62) sind.

16. Gelenkverbindung nach einem der vorhergehenden Ansprüche, wobei die erste Schwenkachse (F'), die zweite Schwenkachse (F") und die zwischenliegende Schwenkachse (E) im Wesentlichen parallel zueinander sind.

17. Gelenkverbindung nach einem der vorhergehenden Ansprüche, wobei die dazwischenliegende Anordnung (33) Lagerbuchsen (121a, 121b) umfasst, die wirkend zwischen dem ersten Schenkel (51) und dem zweiten Schenkel (52) angeordnet sind.

18. Gelenkverbindung nach einem der vorhergehenden Ansprüche, umfassend eine Mehrzahl von Lagereinrichtungen (161', 162', 161", 162"), wobei für jedes Ende (71', 72', 71", 72") eines jeden Kreuzelements (61, 62) eine der Lagereinrichtungen (161', 162', 161", 162") zwischen dem Ende (71', 72', 71", 72") und dem jeweiligen Element, mit dem das Ende (71', 72', 71", 72") verbunden ist, angeordnet ist.

19. Betriebssystem für ein Arbeitsfahrzeug (1) mit einem ersten drehenden Element (11) und einem zweiten drehenden Element (12), die durch eine Gelenkverbindung (21) nach einem der vorhergehenden Ansprüche verbunden sind.

## Revendications

1. Articulation d'attelage pour un véhicule (1), comprenant un premier élément d'attelage (31) configuré pour être couplé à un premier élément rotatif (11), un second élément d'attelage (32) configuré pour être couplé à un second élément rotatif (12), et un ensemble intermédiaire (33) interposé fonctionnellement entre le premier et le second élément d'attelage (31, 32), dans lequel l'ensemble intermédiaire (33) comprend un premier bras (51) et un second bras (52) articulés ensemble sur un axe charnière intermédiaire (E), le premier bras (51) étant couplé de manière mobile au premier élément d'attelage (31) par le biais d'une première articulation mobile (61) offrant deux degrés de liberté de rotation, le second bras (52) étant couplé de manière mobile au second élément d'attelage (32) par le biais d'une seconde articulation mobile (62) offrant deux degrés de liberté de rotation,
dans laquelle le premier bras (51) et le second bras (52) se composent de deux parties (51a, 51b, 52a, 52b) qui peuvent être raccordées l'une à l'autre le long de l'axe charnière intermédiaire (E) ;
ladite articulation d'attelage comprenant en outre :
- un premier régulateur (61) interposé fonctionnellement entre le premier élément d'attelage (31) et le premier bras (51), le premier régulateur (61) définissant le second raccordement mobile ; et
- un second régulateur (62) interposé fonctionnellement entre le second élément d'attelage (32) et le second bras (52), le second régulateur (62) définissant le second raccordement mobile ;
l'articulation d'attelage étant **caractérisée en ce que**
l'assemblage intermédiaire (33) comprend une broche intermédiaire (81) configurée pour définir l'axe charnière intermédiaire (E), dans laquelle chacun du premier bras (51) et du second bras (52) comporte de premières extrémités (91a, 91b, 101a, 101b) et de secondes extrémités (92a, 92b, 102a, 102b) opposées aux premières extrémités (91a, 91b, 101a, 101b), dans laquelle les premières extrémités (91a, 91b) du premier bras (51) sont couplées au premier élément d'attelage (31) par le biais du premier régulateur (61), les secondes extrémités (92a, 92b) du premier bras (51) sont couplées aux premières extrémités (101a, 101b) du second bras (52) par le biais de la broche intermédiaire (81), et les secondes extrémités (102a, 102b) du second bras (52) sont couplées au second élément d'attelage (32) par le biais du second régulateur (62).

2. Articulation d'attelage selon la revendication 1, dans laquelle le premier bras (51) et le second bras (52) comportent un profil sensiblement incurvé.

3. Articulation d'attelage selon la revendication 1 ou la revendication 2, dans laquelle l'un parmi le premier bras (51) et le second bras (52) comporte une forme sensiblement en forme de « Y » et l'autre parmi le premier bras (51) et le second bras (52) comporte une forme sensiblement en forme de « H ».

4. Articulation d'attelage selon l'une quelconque des revendications précédentes, dans laquelle l'assemblage intermédiaire (33) est symétrique par rapport à un plan orthogonal à l'axe charnière intermédiaire (E).

5. Articulation d'attelage selon l'une quelconque des revendications précédentes, dans laquelle les deux pièces (51a, 51b) formant le premier bras (51) sont symétriques par rapport à un premier plan orthogonal à l'axe charnière intermédiaire (E).

6. Articulation d'attelage selon l'une quelconque des revendications précédentes, dans laquelle les deux pièces (52a, 52b) formant le second bras (52) sont symétriques par rapport à un second plan orthogonal à l'axe charnière intermédiaire (E).

7. Articulation d'attelage selon la revendication 5 et la revendication 6, dans laquelle le premier plan et le second plan coïncident.

8. Articulation d'attelage selon l'une quelconque des revendications précédentes, dans laquelle chacun du premier bras (51) et du second bras (52) comporte une partie centrale (141, 142) interposée respectivement entre la première et la seconde extrémité (91a, 91b, 92a, 92b, 101a, 101b, 102a, 102b) et configurée pour raccorder les deux pièces (51a, 51b, 52a, 52b) composant le bras respectif (51, 52).

9. Articulation d'attelage selon l'une quelconque des revendications précédentes, dans laquelle chacun du premier bras (51) et du second bras (52) comporte des moyens de raccordement (151, 152) configurés pour raccorder les deux pièces (51a, 51b, 52a, 52b) composant le bras respectif (51, 52).

10. Articulation d'attelage selon l'une quelconque des revendications précédentes, dans laquelle les moyens de raccordement (151, 152) comprennent au moins une vis (151', 152') s'étendant parallèlement à l'axe charnière intermédiaire (E).

11. Articulation d'attelage selon l'une quelconque des revendications précédentes, dans laquelle les secondes extrémités (92a, 92b) du premier bras (51) sont interposées, par rapport à l'axe charnière intermédiaire (E), entre les premières extrémités (101a, 101b) du second bras (52).

12. Articulation d'attelage selon l'une quelconque des revendications précédentes, dans laquelle le premier bras (51) est sensiblement en forme de « Y » et le second bras (52) est sensiblement en forme de « H ».

13. Articulation d'attelage selon l'une quelconque des revendications précédentes, dans laquelle :
- le premier régulateur (61) comprend de premières extrémités (71') configurées pour définir un premier axe charnière (F'), et le premier bras (51) est fixé au premier régulateur (61) par le biais d'une charnière au niveau du premier axe charnière (F') ; et
- le second régulateur (62) comprend de premières extrémités (71") configurées pour définir un second axe charnière (F"), et le second bras (52) est fixé au second régulateur (62) par le biais d'une charnière au niveau du second axe charnière (F »).

14. Articulation d'attelage selon l'une quelconque des revendications précédentes, dans laquelle :
- le premier régulateur (61) comprend de secondes extrémités (72') configurées pour définir un axe charnière (G') du premier élément d'attelage, orthogonal par rapport à un axe de rotation (C') du premier élément d'attelage (31), et le premier élément d'attelage (31) est fixé au premier régulateur (61) au niveau de l'axe charnière (G') du premier élément d'attelage ; et
- le second régulateur (62) comprend de secondes extrémités (72") configurées pour définir un axe charnière (G") du second élément d'attelage, orthogonal par rapport à un axe de rotation (C") du second élément d'attelage (32), et le second élément d'attelage (32) est fixé au second régulateur (62) au niveau de l'axe charnière (G') du second élément d'attelage (G").

15. Articulation d'attelage selon l'une quelconque des revendications précédentes, dans laquelle les premières extrémités (71') du premier régulateur (61) sont orthogonales aux secondes extrémités (72') du premier régulateur (61), et les premières extrémités (71") du second régulateur (62) sont orthogonales par rapport aux secondes extrémités (72") du second régulateur (62).

16. Articulation d'attelage selon l'une quelconque des revendications précédentes, dans laquelle le premier axe charnière (F'), le second axe charnière (F") et l'axe charnière intermédiaire (E) sont sensiblement parallèles les uns par rapport aux autres.

17. Articulation d'attelage selon l'une quelconque des revendications précédentes, dans laquelle l'ensemble intermédiaire (33) comprend des douilles (121a, 121b) interposées fonctionnellement entre le premier bras (51) et le second bras (52).

18. Articulation d'attelage selon l'une quelconque des revendications précédentes, comprenant une pluralité de roulements (161', 162', 161", 162"), dans laquelle pour chaque extrémité (71', 72', 71", 72"), de chaque régulateur (61, 62') l'un desdits roulements (161', 162', 161", 162") est interposé entre ladite extrémité (71', 72', 71", 72") et l'élément respectif auquel ladite extrémité (71', 72', 71", 72") est couplée.

19. Système opérationnel pour un véhicule de travail (1) comprenant un premier élément rotatif (11) et un second élément rotatif (12) raccordés par une articulation d'attelage (21) selon l'une quelconque des revendications précédentes.
